# FASCICULE DE BREVET EUROPEEN

(11) **EP 2 476 041 B1**
(45) Date de publication et mention de la délivrance du brevet: **28.08.2019**
(21) Numéro de dépôt: 10751686.6
(22) Date de dépôt: 13.09.2010
(51) Int. Cl.: G06F 3/0483, G06F 3/0488

(54) **TERMINAL MOBILE À ÉCRAN TACTILE AFFICHANT UNE PILE DE PAGES**
MOBILES ENDGERÄT MIT EINEM BERÜHRUNGSBILDSCHIRM ZUR ANZEIGE VON SEITENSTAPELN
MOBILE TERMINAL WITH A TOUCH SCREEN THAT DISPLAYS A STACK OF PAGES

(30) Priorité: 11.09.2009 FR 0956280
(43) Date de publication de la demande: 18.07.2012
(73) Titulaire: Milibris, 75009 Paris (FR)
(72) Inventeur: MONTEUX, Guillaume, F-75009 Paris (FR); RUCINE, Nicolas, F-44300 Nantes (FR); MONROUZEAU, Raphaël, F-94700 Maisons Alfort (FR); VAUVILLIER, Luc, F-95130 Le Plessis-Bouchard (FR)
(74) Mandataire: Lebkiri, Alexandre
(86) Numéro de dépôt international: PCT/EP2010/063367
(87) Numéro de publication internationale: WO 2011/029927

(56) Documents cités:
- EP-A1- 1 058 181
- EP-A2- 2 000 894
- WO-A1-2008/000435
- US-A- 5 463 725
- US-A1- 2003 020 687
- US-A1- 2007 083 828
- US-A1- 2008 088 617

## Description

### DOMAINE TECHNIQUE DE L'INVENTION

La présente invention concerne un terminal mobile à écran tactile. L'invention se situe dans le domaine des IHM (Interfaces Homme Machine), appliquées à la lecture en numérique.

### ARRIERE PLAN TECHNOLOGIQUE DE L'INVENTION

Actuellement, les applications sur terminaux mobiles, de par leur capacité d'affichage réduite ne permettent pas de présenter des contenus de type presse/magazine et d'en restituer une navigation et une lecture proche d'un usage papier.

Différentes solutions proposent une lecture en mode flux : les articles sont préalablement extraits et sont présentés sous forme de liste comprenant le titre, une brève description ou chapeau pour encourager la lecture et parfois une image associée. Une fois l'article sélectionné, le mode de lecture présente le texte de l'article sur une colonne ayant la largeur de l'écran du terminal mobile.

Ces solutions présentent cependant un certain nombre d'inconvénients.

Ainsi, aucune de ces solutions ne prend en compte la notion de pagination, le respect des formats de mise en page et de la charte graphique du document d'origine.

Le brevet US 5463725 A décrit une interface avec un affichage similaire à celui d'un livre papier ou un magazine. Pour tourner une page du livre affiché, l'utilisateur touche l'écran avec sa main ou un instrument de pointage qu'il fait ensuite glisser sur l'écran, ce qui provoque une animation de tourné de page, la technique étant très similaire à un tourné de page avec un vrai livre ou magazine.

### DESCRIPTION GENERALE DE L'INVENTION

Dans ce contexte, la présente invention vise à fournir un terminal à écran tactile dont l'enjeu est de reproduire en termes d'usage la sensation de lecture papier sur terminal mobile et de permettre aux groupes de presse de pouvoir dématérialiser leurs publications en faisant abstraction des contraintes matérielles et techniques des différents terminaux de lecture.

A cette fin, l'invention propose un terminal mobile à écran tactile tel que défini dans la revendication indépendante 1.

Grâce à l'invention, on utilise un système de navigation et de repérage reproduisant une sensation de feuilletage d'une oeuvre papier et un mode de lecture qui ne dénature pas la structure et la maquette de la page originale. Le principal avantage de cette solution est qu'elle permet de lire une publication numérique de manière fidèle à son équivalent papier, que ce soit au niveau du feuilletage ou de la lecture tout en prenant en compte les spécificités techniques du terminal de lecture. Aucune solution existante ne propose une expérience de lecture de ce type. L'invention est destinée aux éditeurs et groupes de presse souhaitant diffuser leur contenu sur terminal mobile. L'utilisateur final de l'invention sera donc le client qui consulte les oeuvres délivrées sur son terminal mobile.

On entend par pré-chargement d'une page le passage de ladite page des moyens de mémorisation à la mémoire vive du terminal mobile tactile en vue d'un affichage instantané de ladite page.

On entend par pile un ensemble donné de pages affichées les unes au dessus des autres sur le terminal mobile tactile.

On entend par passage une transition de type animation (définie par la composée d'une rotation et d'une translation variable dans le temps) lors du changement de la page courante.

On entend par passage de la page N, à la page N+1 ou page N-1 le fait d'afficher la page suivant la page courante en lieu et place de la page courante ou la page précédant la page courante en lieu et place de la page courante, le tout en fonction de la détection du relevé du doigt.

Le terminal selon l'invention peut également présenter les caractéristiques selon une ou plusieurs des revendications dépendantes 2 à 5.

### DESCRIPTION DETAILLEE DES FORMES DE REALISATION PRE-FEREES DE L'INVENTION

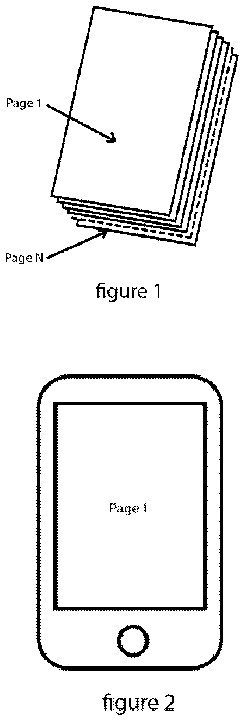

D'autres caractéristiques et avantages de l'invention ressortiront clairement de la description qui en est donnée ci-dessous, à titre indicatif et nullement limitatif, en référence aux figures 1 à 12 annexées.

Le terminal selon l'invention comporte plusieurs moyens logiciels (i.e. applications) dédiés à la mise en oeuvre de l'invention.

Le terminal à écran tactile selon l'invention comporte tout d'abord des moyens de repérage qui permettent de se déplacer dans la publication numérique. Ce procédé est à la fois visuel et gestuel. Il permet de reproduire sur le terminal mobile tactile une sensation de feuilletage.

Les moyens d'affichage étant généralement rectangulaires, on distinguera deux positions de lecture dépendant de l'orientation de celui-ci : la lecture en mode portrait et la lecture en mode paysage. Le mode de lecture est défini au lancement de l'application, ou si le terminal le permet, de manière automatique en fonction de l'orientation de celui-ci.

### Mode Portrait

Le mode portrait propose à l'utilisateur une disposition des pages de la publication numérique sous forme d'une pile de pages. Chaque page ne comporte qu'un recto. La page 1 est située au dessus de la pile, la dernière page est située en dessous de la pile (figure 1). Le terminal affiche la pile vue de haut. Seule la page du dessus est visible (figure 2).

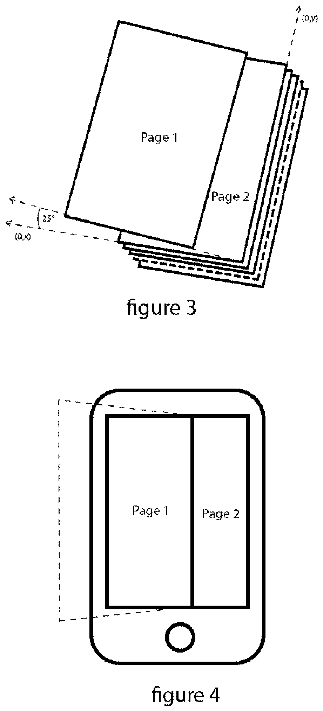

Le passage d'une page à l'autre se fait visuellement par l'intermédiaire d'une animation. Pour aller à la page suivante, la page du dessus de la pile glisse vers la gauche et sort alors de l'écran du terminal découvrant la page du dessous. Pour améliorer le rendu visuel de la transition et retranscrire une sensation d'effeuillage réelle (décollement de la page), le mouvement est composé à la fois d'une translation négative sur l'axe des X égale à la largeur de la page ainsi qu'une rotation ayant pour axe le bord droit de la page et un angle de l'ordre de 25 degrés (figures 3 et 4).

Pour retourner à la page précédente, l'animation se déroule dans le sens inverse : la page précédente arrive de la gauche et vient recouvrir l'écran lors de la translation inverse.

### Déclenchement et contrôle de l'animation

Le tourné de page est contrôlé par le glissement du doigt de l'utilisateur sur l'écran tactile du terminal. Ce moyen de commande permet à la fois de commander le sens de l'animation, mais aussi le déroulement de celle-ci.

Ce procédé est réalisé en 3 étapes :
1. L'utilisateur pose son doigt
2. L'utilisateur déplace son doigt
3. L'utilisateur relève son doigt

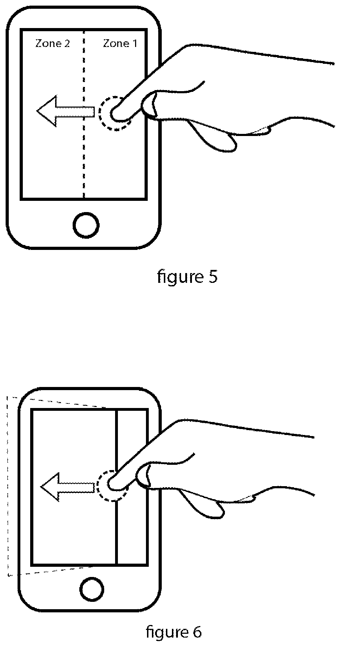

L'étape 1 permet, en fonction de la position de départ de déterminer le sens du tourné de page (moyen de détection de la page cible). La zone tactile est virtuellement découpée verticalement en deux zones de départ possibles de largeur égale (figure 5). En posant le doigt sur l'une des deux zones l'utilisateur indique qu'il veut soit passer à la page suivante, soit revenir à la page précédente.

Sur la figure 5 l'utilisateur pose le doigt dans la zone 1. Le procédé détecte donc qu'il demande un passage à la page suivante (respectivement la zone 2 permet de revenir à la page précédente).

Quand l'utilisateur glisse son doigt horizontalement, l'animation de la page à déplacer (ou page cible, définie par la zone de départ) suit le doigt. La translation sur l'axe (O,x) est égale au déplacement deltaX entre la position de départ et la position actuelle du doigt (figure 6).

Quand l'utilisateur relève son doigt l'animation se poursuit de manière automatique soit :
- Jusqu'à la position finale de l'animation si le déplacement deltaX est supérieur ou égal à un déplacement minimal.
- Jusqu'à la position initiale de l'animation si le déplacement est inférieur à un déplacement minimal.

Ce déplacement minimal est égal à 30% de la largeur de l'écran.

Une exception d'animation est prévue pour la dernière page : pour la commande « page suivante » (départ en zone 1), un facteur multiplicatif de 0,5 est appliqué à deltaX pour calculer la translation lors du contrôle de l'animation au doigt et, quelle que soit la valeur de deltaX au moment ou l'utilisateur relève le doigt (s'il est supérieur ou inférieur au déplacement minimal), la page retournera à son emplacement initial.

Ce facteur multiplicatif a pour but de simuler un frottement fort ou une résistance à un tourné de page afin d'indiquer au lecteur qu'il s'agit de la dernière page et qu'elle ne tournera pas.

La séquence complète pourra être répétée indéfiniment. Les animations de fin de tourné de page étant indépendantes des moyens de commande, une autre animation pourra être lancée alors que la précédente n'est pas terminée donnant alors une impression de tourné multipage.

### Mode Paysage

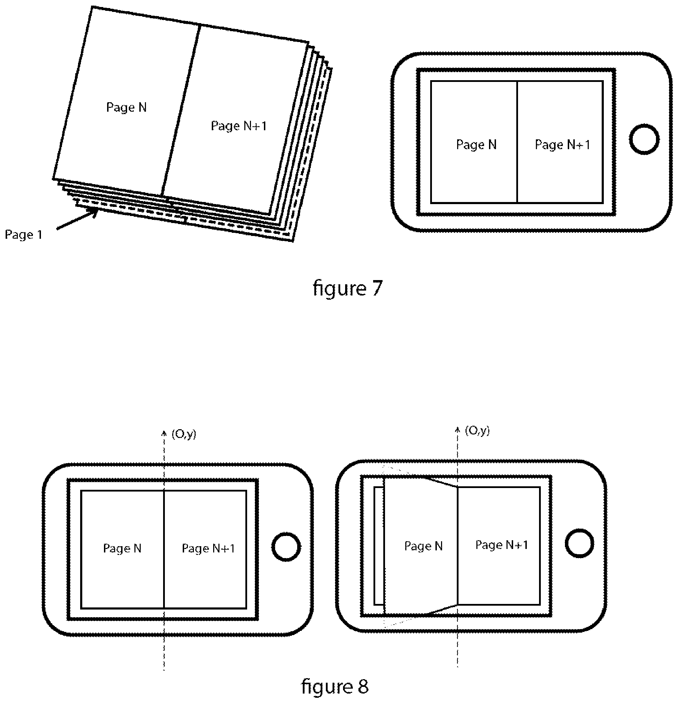

Le mode paysage propose à l'utilisateur une représentation fidèle de l'oeuvre (représentation matérielle). Chaque page possède donc un recto et un verso. L'écran étant plus large, les moyens d'affichage peuvent alors présenter les deux pages d'une publication numérique. Concrètement, les pages se positionnent selon deux piles côte à côte (figure 7). A gauche se situe la pile des pages précédentes, à droite, les pages suivantes. La pile de gauche est ordonnée en ordre ascendant, alors que la pile de droite en ordre descendant.

Le passage d'une page à l'autre change pour ce mode : l'animation se fait par un tourné de page selon l'axe central (O,y) afin de reproduire fidèlement un tourné de page réel relatif à la pliure (figure 8).

Les moyens de commande et de contrôle de l'animation reposent sur les mêmes principes que décrits dans la partie concernant le « déclenchement et contrôle de l'animation » :
- L'écran est séparé en deux zones virtuelles pour déterminer le sens de l'animation. Ces zones définissent le moyen de détection et correspondent aux deux pages affichées. La page touchée devient la page ciblée par l'animation.
- L'animation est contrôlée par le doigt. L'équation donnant l'angle de rotation en fonction du déplacement deltaX est pour ce mode : angle = deltaX ^{∗} 180 / largeur de l'écran.
- Au relevé du doigt si la distance minimum (30 % de la largeur) est parcourue, une animation vers la valeur finale (180°) est déclenchée, sinon, vers la valeur initiale (0°).

On notera qu'il n'y a pas d'exception d'animation pour la dernière page. La « quatrième de couverture » doit pouvoir être visible.

En outre, pour les deux modes (portrait et paysage), les effets de bord sont à gérer. (Exemple : il est impossible de sélectionner une page précédente (zone 2) quand on est sur la première page)

### Procédés de lecture :

Une fois la page repérée, le terminal selon l'invention propose deux possibilités d'accéder à son contenu afin de le lire.

### Lecture en mode texte

Le mode de lecture texte est déclenché par une combinaison de touches ou gestuelle ergonomiques définis selon le terminal de lecture. Exemple : Appui du doigt sans glissement, touche dédiée, ...

La lecture en mode texte se fait en deux temps :
- Un premier écran présentant tous les titres de la page en cours de lecture (et uniquement ceux ci), invitant le lecteur à en sélectionner un. Une image pourra être associée en miniature si l'article en comporte une.
- Une page de lecture de l'article sélectionné.

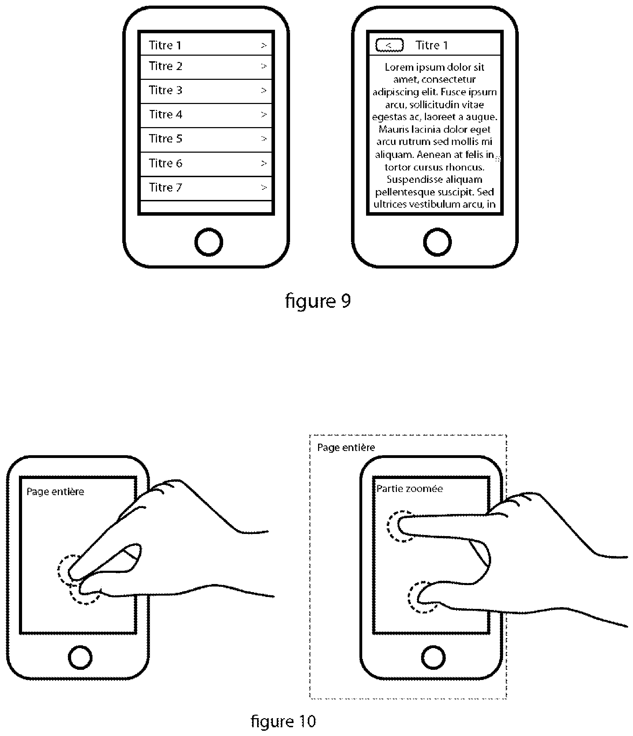

La liste des articles (figure 9) pourra défiler de haut en bas si la liste des articles est longue et ne peut être affichée entièrement. De la même façon, le texte de l'article pourra lui aussi être lu en entier. Le défilement est commandé par un glissement vertical du doigt sur l'écran du terminal.

### Lecture en mode zoom

Le mode de lecture en mode zoom permet de lire directement à partir des vues de repérage.

Ce mode permet de zoomer/dézoomer et de se déplacer dans une page telle qu'elle est affichée et donc de ne pas dénaturer sa mise en page. Ce mode de lecture est déclenché selon une combinaison de touches ou une gestuelle ergonomique définie selon le terminal (Exemple : Ecartement/rapprochement des doigts (si le terminal le permet), double tap du doigt, molette, touches haut/bas, ...)

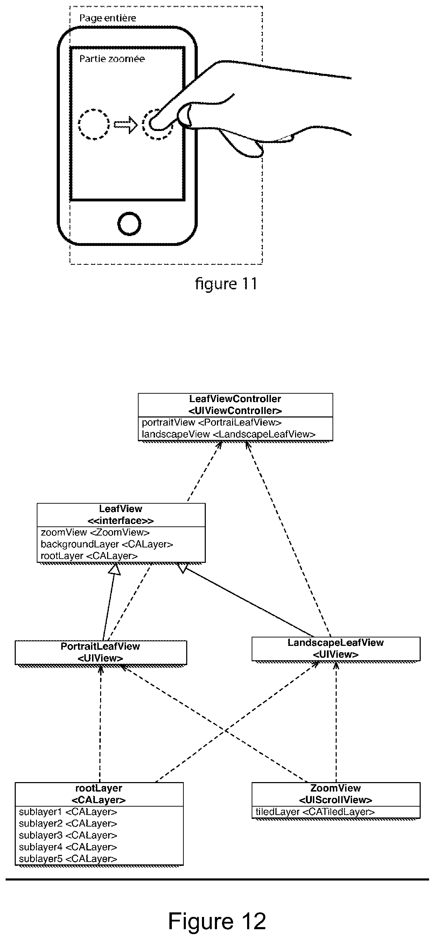

En lecture zoomée, seulement une partie de la page est affichée (figure 10). Le déplacement dans la page se fait alors par un glissement du doigt (figure 11).

### Exemple de mise en oeuvre technique

Dans le cas d'un terminal iPhone/iPod Touch (Apple, langage de programmation Objective-C), la mise en oeuvre de l'invention pourra être la suivante (cf. figure 12) :
- Un contrôleur « LeafViewController » gère les deux modes de présentation sous forme de Vues et permet le passage de la « portrait-View » à la « landscapeView » suivant l'orientation de l'appareil.
- Les deux vues implémentent l'interface (ou protocole) « LeafView » qui leur ajoute deux calques : « backgroundLayer » et « rootLayer ». Le premier contient une image de fond alors que le second contient des sous-calques contenant les pages. Ils bénéficient aussi d'une « zoomView » qui s'affiche au dessus des calques lors du passage en mode zoom.
- Chaque calque de page dessine son contenu à partir d'une source image de format PNG ou JPEG
- La zoomView hérite de la classe UIScrollView (permet le déplacement et le zoom) et est composée d'un tiledLayer : un calque au chargement progressif sur plusieurs niveaux de zoom qui permettra de dessiner petit à petit l'image en haute définition par aplatissage d'une source PDF.

La signification des flèches utilisées sur la figure 12 est donnée dans le tableau 1 ci-dessous :
Flèches pleines : « implémente » Entre chevrons : classe mère
**Flèches pointillées :** « est lié à »
**Entre doubles chevrons :** interface Tableau 1.

### Procédé de pré-chargement des pages

Pour des soucis de performances et de mémoire, toutes les pages d'une pile ne seront pas chargées en une fois. Seulement les N pages précédant et suivant la page affichée seront chargées. N étant fixé et ayant une valeur minimale de 2. La pile comprend donc, hors effets de bord, un minimum de 5 pages chargées. A chaque tourné de page, la page affichée change et les pages se chargent et se déchargent en fonction de cette nouvelle valeur.

## Revendications

1. Terminal mobile à écran tactile comportant :
- des moyens de mémorisation sur lesquels une pluralité de pages formant une séquence est stockée ;
- des moyens d'affichage en mode portrait de la pluralité de pages sous forme d'une pile de pages recto empilées dans le sens descendant de la séquence de pages ;
- des moyens de commande desdits moyens d'affichage comportant :
∘ des moyens tactiles de détection aptes à la détection d'un posé, d'un glissement et d'un relevé de doigt de l'utilisateur ;
∘ des moyens de détection d'une page cible qui se définit comme étant soit la page affichée intégralement sur lesdits moyens d'affichage, dite page courante, soit la page précédant la page courante, en fonction de la détection du posé de doigt sur l'une de deux zones de l'écran tactile respectivement associées à la page courante et à la page précédant la page courante ;
∘ des moyens d'exécution d'animations de tourné de page, chaque animation étant composée d'une rotation et/ou d'une translation d'une page ;
∘ des moyens pour passer de la page courante, dite page N, à la page suivante dans la pile, dite page N+1, ou à la page précédente, dite page N-1, en fonction de la détection du relevé du doigt, chaque passage se faisant visuellement par une animation de tourné de page de la page cible ;
ledit terminal comportant en outre des moyens de pré-chargement d'au moins deux pages suivant la page courante et/ou d'au moins deux pages précédant la page courante, lesdits pré-chargements s'effectuant dans la limite du nombre de pages précédant et/ou suivant la page courante ;
lesdits moyens de commande desdits moyens d'affichage comportant en outre des moyens pour passer de ladite page N+1 à la page suivant la page N+1, dite page N+2, alors que le passage de la page N à la page N+1 est en cours, et des moyens pour passer de ladite page N-1 à la page précédant la page N-1, dite page N-2, alors que le passage de la page N à la page N-1 est en cours, chaque passage se faisant visuellement par une animation de tourné de page ; et la fin d'une première animation de tourné de page étant indépendante de la commande d'une deuxième animation de tourné de page lancée alors que la première animation de tourné de page n'est pas terminée.

2. Terminal mobile selon la revendication précédente, **caractérisé en ce que** lesdits moyens de commande comportent :
∘ des moyens pour arrêter le passage de ladite page N à la page suivante, dite page N+1, et revenir de la page suivante, dite page N+1, à la page courante, dite page N ;
∘ des moyens pour arrêter le passage de ladite page N à la page précédente, dite page N-1, et revenir de la page précédente, dite page N-1, à la page courante, dite page N.

3. Terminal mobile selon l'une des revendications précédentes, **caractérisé en ce que** lesdits moyens pour passer de la page N à la page N+1 ou à la page N-1, en fonction de la détection du relevé du doigt, font passer la page N à la page N+1 ou à la page N-1 sous réserve que le glissement ait atteint une valeur seuil.

4. Terminal mobile selon l'une des revendications précédentes, **caractérisé en ce que** lesdits moyens de commande comportent des moyens d'exécution d'une composée d'une rotation d'un angle variable et d'une translation de vecteur variable, de la page cible, ces variations étant dépendantes dudit glissement détecté.

5. Terminal mobile selon l'une des revendications précédentes, **caractérisé en ce qu'**il comporte des moyens pour émettre un effet sonore lors du passage de la page courante à la page N+1 ou à la page N-1.

## Patentansprüche

1. Mobiles Terminal mit berührungssensitivem Bildschirm, umfassend:
- Speichermittel, auf denen eine Vielzahl von eine Sequenz bildenden Seiten gespeichert ist;
- Anzeigemittel im Porträtmodus der Vielzahl von Seiten in Form eines Stapels von gestapelten Vorderseiten in absteigender Reihenfolge der Seitensequenz;
- Steuermittel der genannten Anzeigemittel, umfassend:
∘ Berührungssensitive Erfassungsmittel, die zum Erfassen eines Antippens, eines Wischens und eines Ziehens durch den Finger des Nutzers geeignet sind;
∘ Erfassungsmittel einer Zielseite, die sich entweder als die vollständig auf den genannten Anzeigemitteln angezeigte Seite, bezeichnet als aktuelle Seite, oder als die vorherige Seite der aktuellen Seite in Abhängigkeit von der Erfassung des Antippens auf einem der zwei Bereiche des berührungssensitiven Bildschirms definiert, die jeweils der aktuellen Seite und der vorherigen Seite der aktuellen Seite zugeordnet sind ;
∘ Animations-Ausführmittel eines Umblätterns einer Seite, wobei jede Animation aus einer Drehung und / oder einer Translation einer Seite gebildet ist;
∘ Mittel zum Übergehen der aktuellen Seite, bezeichnet als Seite N, auf die folgende Seite in dem Stapel, bezeichnet als Seite N+1, oder auf die vorherige Seite, bezeichnet als Seite N-1, in Abhängigkeit von der Erfassung des Ziehens des Fingers, wobei jeder Übergang visuell durch eine Seitenumblätter-Animation der Zielseite erfolgt;
wobei das genannte Terminal darüber hinaus Vorlademittel von wenigstens zwei Seiten umfasst, die der aktuellen Seite und / oder wenigstens zwei Seiten folgen, die der aktuellen Seite folgen, wobei die genannten Vorladungen innerhalb der Grenze der Seitenanzahl vor und / oder nach der aktuellen Seite erfolgen;
wobei die genannten Steuermittel der genannten Anzeigemittel darüber hinaus Mittel zum Übergehen von der genannten Seite N+1 zur folgenden Seite der Seite N+1, bezeichnet als Seite N+2, umfassen, während der Übergang der Seite N auf die Seite N+1 in Bearbeitung ist, und Mittel zum Übergehen von der genannten Seite N-1 auf die vorherige Seite der Seite N-1, bezeichnet als Seite N-2, während der Übergang von der Seite N zur Seite N-1 in Bearbeitung ist, wobei jeder Übergang visuell durch eine Seiten-Umblätteranimation erfolgt;
und wobei das Ende einer ersten Seiten-Umblätteranimation unabhängig von der Steuerung einer zweiten Seiten-Umblätteranimation ist, die initiiert ist, während die erste Seiten-Umblätteranimation nicht abgeschlossen ist.

2. Mobiles Terminal gemäß dem voranstehenden Anspruch, **dadurch gekennzeichnet, dass** die genannten Steuermittel umfassen:
∘ Mittel, um den Übergang von der genannten Seite N zur folgenden Seite, bezeichnet als Seite N+1, zu stoppen und von der folgenden Seite, bezeichnet als Seite N+1, auf die aktuelle Seite, bezeichnet als Seite N, zurückzukehren;
∘ Mittel, um den Übergang von der genannten Seite N auf die vorherige Seite, bezeichnet als Seite N-1, zu stoppen und von der vorherigen Seite, bezeichnet als Seite N-1, auf die aktuelle Seite, bezeichnet als Seite N, zurückzukehren.

3. Mobiles Terminal gemäß einem der voranstehenden Ansprüche, **dadurch gekennzeichnet, dass** die genannten Mittel zum Übergehen von der Seite N auf die Seite N+1 oder auf die Seite N-1 in Abhängigkeit von der Erfassung des Ziehens mit dem Finger die Seite N auf die Seite N+1 oder auf die Seite N-1 unter dem Vorbehalt übergehen lassen, dass das Wischen einen Schwellenwert erreicht hat.

4. Mobiles Terminal gemäß einem der voranstehenden Ansprüche, **dadurch gekennzeichnet, dass** die genannten Steuermittel Ausführungsmittel einer Zusammensetzung einer Drehung eines variablen Winkels und einer variablen Vektortranslation der Zielseite umfassen, wobei diese Variationen von dem erfassten Wischen abhängig sind.

5. Mobiles Terminal gemäß einem der voranstehenden Ansprüche, **dadurch gekennzeichnet, dass** es Mittel zum Ausgeben eines Toneffekts bei Übergang von der aktuellen Seite zur Seite N+1 oder zur Seite N-1 umfasst.

## Claims

1. Mobile terminal with a touch screen comprising:
- storage means on which a plurality of pages forming a sequence are stored;
- means for displaying in portrait mode the plurality of pages in the form of a stack of recto pages stacked in the descending direction of the page sequence;
- means for controlling said display means comprising:
∘ detection touch means able to detect a placement, a sliding and a lifting of a finger of the user;
∘ means for detecting a target page that is defined as being either the page integrally displayed on said display means, called current page, or the page preceding the current page, depending on the detection of the finger placement on one of two areas of the touch screen respectively associated to the current page and the page preceding the current page;
∘ means for executing page turning animations, each animation being composed of a rotation and/or a translation of a page;
∘ means for going from the current page, called page N, to the next page in the stack, called page N+1, or to the previous page, called page N-1, depending on the detection of the finger lifting, each passage being made visually by a page turning animation of the target page;
said terminal further comprising means for pre-loading at least two pages following the current page and/or at least two pages preceding the current page, said pre-loadings being carried out within the limit of the number of pages preceding and/or following the current page;
said means for controlling said display means further comprising means for moving from said page N+1 to the page following page N+1, called page N+2, while the passage from page N to page N+1 is in progress and means for going from said page N-1 to the page preceding page N-1, called page N-2, while the passage from page N to page N-1 is in progress, each passage being made visually by a page turning animation;
and the end of a first page turning animation being independent of the control of a second page turning animation launched while the first page turning animation has not ended.

2. Mobile terminal according to the previous claim, **characterized in that** said control means comprise:
∘ means to stop the passage from said page N to the following page, called page N+1, and return from the following page, called page N+1, to the current page, called page N;
∘ means to stop the passage from said page N to the preceding page, called page N-1, and return from the preceding page, called page N-1, to the current page, called page N.

3. Mobile terminal according to one of the previous claims, **characterized in that** said means to go from page N to page N+1 or to page N-1, depending on the detection of the finger lifting, make page N go to page N+1 or to page N-1 provided that the sliding has reached a threshold value.

4. Mobile terminal according to one of the previous claims, **characterized in that** said control means comprise means for executing a composite of a variable angle rotation and a variable vector translation, of the target page, these variations being dependent on said detected sliding.

5. Mobile terminal according to one of the previous claims, **characterized in that** it comprises means to emit a sound effect during passage from the current page to page N+1 or to page N-1.
